# EUROPEAN PATENT APPLICATION

(11) **EP 4 557 656 A1**
(43) Date of publication of application: **21.05.2025**
(21) Application number: 23845368.2
(22) Date of filing: 18.07.2023
(51) Int. Cl.: H04L 5/00, H04W 8/26

(54) **METHOD FOR ESTABLISHING SENSING NETWORK, AND RELATED APPARATUS**

(30) Priority: 29.07.2022 CN 202210908190
(71) Applicant: Huawei Technologies Co., Ltd., Shenzhen, Guangdong 518129 (CN)
(72) Inventor: WANG, Hao, Shenzhen, Guangdong 518129 (CN); ZHANG, Daqing, Beijing 100871 (CN); GUO, Xingmin, Shenzhen, Guangdong 518129 (CN); SUN, Chao, Shenzhen, Guangdong 518129 (CN); SUN, Xue, Shenzhen, Guangdong 518129 (CN)
(74) Representative: Gill Jennings & Every LLP
(86) International application number: PCT/CN2023/107853
(87) International publication number: WO 2024/022156

(57) **Abstract**

This application provides a method for establishing a sensing network and a related apparatus, to help construct a Wi-Fi sensing network without affecting an original Wi-Fi communication network, so as to improve communication quality. The method includes: obtaining a media access control MAC address of a terminal device by using a routing device, where the terminal device is connected to the routing device; sending a packet to the terminal device based on the MAC address; receiving, from the terminal device, a response to the packet; and obtaining channel state information CSI between a sensing device and the terminal device based on the response, to perform sensing.

## Description

This application claims priority to Chinese Patent Application No. 202210908190.1, filed with the China National Intellectual Property Administration on July 29, 2022 and entitled "METHOD FOR ESTABLISHING SENSING NETWORK AND RELATED APPARATUS", which is incorporated herein by reference in its entirety.

### TECHNICAL FIELD

This application relates to the terminal field, and more specifically, to a method for establishing a sensing network and a related apparatus.

### BACKGROUND

A whole-house intelligent scenario can bring more intelligent and brand-new experience to a user. Whole-house intelligence includes "rich ecosystem" and "true intelligence". The "true intelligence" requires construction of dynamic intelligence based on all scenarios to break through a current situation of "weak" intelligence and "pseudo" intelligence in the smart home industry and surpass expected experience of the user. The whole-house intelligent scenario provides a whole-house wireless fidelity (wireless fidelity, Wi-Fi) communication network for the user, so that each terminal device in the home is connected to the network through a router. The key to dynamic "true" intelligence in the whole-house intelligent scenario lies in user context awareness. Currently, in an existing solution, a Wi-Fi sensing network may be constructed by reusing an existing Wi-Fi communication network, to provide a sensing service, for example, a smart security protection service or a health care service, for the user in the whole-house intelligent scenario. In this solution, the user may purchase a sensing device. When the sensing network is established, the user may need to disconnect the terminal device in the whole-house intelligent scenario from the router, and then connect the terminal device to the sensing device to construct the Wi-Fi sensing network.

However, in the process of constructing the Wi-Fi sensing network, the user needs to manually disconnect the terminal device from the router, and then connect the terminal device to the sensing device. Consequently, an original routing and networking relationship in the whole-house intelligent scenario changes. This may deteriorate communication quality of the terminal device.

In view of this, in the whole-house intelligent scenario, how to construct the Wi-Fi sensing network without affecting the original Wi-Fi communication network becomes an urgent problem to be resolved.

### SUMMARY

This application provides a method for establishing a sensing network and a related apparatus, to help construct a Wi-Fi sensing network without affecting an original Wi-Fi communication network. This improves communication quality.

According to a first aspect, a method for establishing a sensing network is provided, applied to a sensing device. The method includes: obtaining a media access control (media access control, MAC) address of a terminal device by using a routing device, where the terminal device is connected to the routing device; sending a packet to the terminal device based on the MAC address; receiving, from the terminal device, a response to the packet; and obtaining channel state information (channel state information, CSI) between the sensing device and the terminal device based on the response, to perform sensing.

In this application, a Wi-Fi communication network is established between the terminal device and the routing device. To perform sensing without changing the existing Wi-Fi communication network, the sensing device may obtain the MAC address of the terminal device, then send the packet to the terminal device based on the MAC address of the terminal device, measure the CSI of the link between the sensing device and the terminal device based on the response, from the terminal device, to the packet, and sense a change in an environment based on the measured CSI, for example, sense whether there is an object (including a person) moving in the environment, and sense a direction and a speed of the object.

Based on this technical solution, the terminal device can communicate with the sensing device without disconnecting from the routing device. In this way, an original Wi-Fi communication network is not affected, communication quality of the terminal device is improved, and sensing in a whole-house intelligent scenario is implemented. In addition, because a connection between the terminal device and the sensing device does not need to be configured, a user operation is reduced.

In addition, because the terminal device can communicate with the sensing device without connecting to the sensing device, a limitation that the sensing device needs to play a role of a wireless access point (access point, AP) is broken. The sensing device in this application may be an AP, or may be a common station (station, STA) device.

With reference to the first aspect, in some implementations of the first aspect, the obtaining a MAC address of a terminal device by using a routing device includes: connecting to the routing device; broadcasting an address resolution protocol (address resolution protocol, ARP) request packet by using the routing device; and receiving an ARP response packet of the terminal device from the routing device, where the ARP response packet includes the MAC address of the terminal device.

In this application, the sensing device may be connected to the routing device, and establish a connection to the routing device. After the sensing device is connected to the routing device, the sensing device may forward the ARP request packet to the terminal device by using the routing device. After receiving the ARP request packet, the terminal device forwards the ARP response packet to the sensing device by using the routing device. In this way, the sensing device can obtain the MAC address of the terminal device from the APR response packet.

With reference to the first aspect, in some implementations of the first aspect, the sending a packet to the terminal device based on the MAC address includes: sending the packet to the terminal device in an air interface injection (injection) manner or a tunneled direct link setup (tunneled direct link setup, TDLS) manner based on the MAC address.

In a manner, because the sensing device is connected to the routing device, the sensing device may establish a TDLS connection to the terminal device with assistance of the routing device, so that the sensing device can perform point-to-point communication with the terminal device through the TDLS connection without forwarding by the routing device.

In another manner, the sensing device directly communicates with the terminal device in an air interface injection (injection) manner without assistance of the routing device Y.

With reference to the first aspect, in some implementations of the first aspect, the obtaining a MAC address of a terminal device by using a routing device includes: receiving a MAC address and an operating frequency band of the routing device; and obtaining the MAC address of the terminal device based on the MAC address and the operating frequency band of the routing device.

In this application, the sensing device does not need to be connected to the routing device. The routing device periodically broadcasts a beacon (beacon) frame to the outside. The beacon frame includes a service set identifier, the MAC address, and the operating frequency band of the routing device. In this way, the sensing device may obtain the service set identifier, the MAC address, and the operating frequency band of the routing device, to obtain the MAC address of the terminal device.

With reference to the first aspect, in some implementations of the first aspect, the obtaining the MAC address of the terminal device based on the MAC address and the operating frequency band of the routing device includes: listening to a packet on the operating frequency band; and obtaining the MAC address of the terminal device based on a packet detected through listening and the MAC address of the routing device.

In this application, the sensing device may listen to packets on the operating frequency band of the routing device. These packets are either sent by the routing device to the terminal device or sent by the terminal device to the routing device. Therefore, the packet detected through listening includes the MAC address of the terminal device. In this way, the sensing device can obtain the MAC address of the terminal device.

With reference to the first aspect, in some implementations of the first aspect, the packet detected through listening includes a first packet, and a destination MAC address of the first packet is the MAC address of the routing device. The obtaining the MAC address of the terminal device based on a packet detected through listening and the MAC address of the routing device includes: determining a source MAC address of the first packet as the MAC address of the terminal device.

In this application, the destination MAC address of the first packet detected through listening by the sensing device is the MAC address of the routing device. In other words, the first packet is a packet sent by another device to the routing device. In this case, the source MAC address of the first packet is a MAC address of the another device that sends the first packet. Therefore, the sensing device may determine the source MAC address of the first packet as the MAC address of the terminal device.

With reference to the first aspect, in some implementations of the first aspect, the packet detected through listening includes a second packet, and a source MAC address of the second packet is the MAC address of the routing device. The obtaining the MAC address of the terminal device based on a packet detected through listening and the MAC address of the routing device includes: determining a destination MAC address of the second packet as the MAC address of the terminal device.

In this application, the source MAC address of the second packet detected through listening by the sensing device is the MAC address of the routing device. In other words, the second packet is a packet sent by the routing device to another device. In this case, the destination MAC address of the second packet is a MAC address of the another device that receives the second packet. Therefore, the sensing device may determine the destination MAC address of the second packet as the MAC address of the terminal device.

With reference to the first aspect, in some implementations of the first aspect, the sending a packet to the terminal device based on the MAC address includes: sending the packet to the terminal device in an air interface injection (injection) manner based on the MAC address.

With reference to the first aspect, in some implementations of the first aspect, the sending a packet to the terminal device based on the MAC address includes: sending a first probe packet to the terminal device at a preset first frequency based on the MAC address. The obtaining CSI between the sensing device and the terminal device based on the response, to perform sensing includes: obtaining first CSI between the sensing device and the terminal device based on a response, from the terminal device, to the first probe packet, to determine whether there is a person moving in first space in which the terminal device is located.

In this application, the sensing device first sends the first probe packet to the terminal device at the first frequency, and may sense, based on the response, from the terminal device, to the first probe packet, whether there is a person moving in an environment. The first frequency is a low frequency.

With reference to the first aspect, in some implementations of the first aspect, if it is determined, based on the first CSI, that there is a person moving in the first space in which the terminal device is located, a second probe packet is sent to the terminal device at a second frequency, where the second frequency is higher than the first frequency.

In this application, when determining that there is a person moving in the first space, the sensing device can further increase a frequency of sending a probe packet to the terminal device, so that more refined CSI information can be obtained, and information such as movement of the person can be further sensed.

With reference to the first aspect, in some implementations of the first aspect, the terminal device is a primary device in a plurality of terminal devices in same space, and the plurality of terminal devices further include at least one candidate device connected to the routing device. The method further includes: sending a third probe packet to the at least one candidate device at the first frequency.

In this application, the sensing device sends, at the second frequency, a probe packet to the primary device in the same space, and sends, at the first frequency, a probe packet to the candidate device in the same space. In this way, power consumption of the sensing device can be reduced.

With reference to the first aspect, in some implementations of the first aspect, after the second probe packet is sent to the terminal device at the second frequency, the method further includes: if no response, from the terminal device, to the second probe packet is received, determining a target device from the at least one candidate device, where the target device is one of candidate devices that respond to the third probe packet; and adjusting a frequency of sending a probe packet to the target device to the second frequency.

In this application, if the terminal device used as the primary device is abnormal and cannot feed back, to the sensing device, a response to the probe packet, the sensing device selects one target device from the at least one candidate device as a temporary primary device, and increases the frequency of sending the probe packet to the target device to the second frequency. In this way, continuous and stable sensing is facilitated, and an accurate sensing result is obtained.

With reference to the first aspect, in some implementations of the first aspect, after the obtaining a MAC address of a terminal device by using a routing device, the method further includes: writing the MAC address of the terminal device into a MAC address list.

With reference to the first aspect, in some implementations of the first aspect, the method further includes: updating the MAC address list when a new MAC address is obtained.

According to a second aspect, an apparatus for establishing a sensing network is provided, including a module configured to perform the method in any one of the possible implementations of the first aspect. Specifically, the apparatus includes the module configured to perform the method according to any possible implementation of the first aspect.

According to a third aspect, another apparatus for establishing a sensing network is provided, including a processor and a memory. The processor is coupled to the memory, the memory may be configured to store a computer program, and the processor may be configured to invoke and execute the computer program in the memory, to implement the method according to any one of the possible implementations of the first aspect.

In an implementation, the apparatus for establishing a sensing network is a sensing device. When the apparatus for establishing a sensing network is a sensing device, a communication interface may be a transceiver or an input/output interface.

In another implementation, the apparatus for establishing a sensing network is a chip configured in a sensing device. When the apparatus for establishing a sensing network is a chip configured in the sensing device, a communication interface may be an input/output interface. The chip may be a chip in a standard later than Wi-Fi 802.11n.

According to a fourth aspect, a processor is provided, including an input circuit, an output circuit, and a processing circuit. The processing circuit is configured to: receive a signal by using the input circuit, and transmit the signal by using the output circuit, so that the processor performs the method according to any one of the possible implementations of the first aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

According to a fifth aspect, a processing apparatus is provided, and includes a processor and a memory. The processor is configured to read instructions stored in the memory, receive a signal through a receiver, and transmit a signal through a transmitter, to perform the method according to any one of the possible implementations of the first aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

It should be understood that a related data exchange process like sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processing apparatus in the fifth aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and may be implemented by reading software code stored in the memory. The memory may be integrated into the processor, or may be located outside the processor and exist independently.

According to a sixth aspect, a computer program product is provided. The computer program product includes computer program code. When the computer program code is run, a computer is enabled to perform the method according to any one of the possible implementations of the first aspect.

According to a seventh aspect, a computer-readable storage medium is provided. The computer-readable storage medium stores a computer program. When the computer program is run, a computer is enabled to perform the method according to any one of the possible implementations of the first aspect.

### BRIEF DESCRIPTION OF DRAWINGS

FIG. 1 is a diagram of a home Wi-Fi communication networking environment;
FIG. 2 is a diagram of establishing a sensing network by reusing a Wi-Fi infrastructure;
FIG. 3 is another diagram of establishing a sensing network by reusing a Wi-Fi infrastructure;
FIG. 4 is a diagram of establishing a sensing network by reusing a Wi-Fi infrastructure according to an embodiment of this application;
FIG. 5 is a diagram of obtaining CSI by reusing a Wi-Fi infrastructure according to an embodiment of this application;
FIG. 6 is another diagram of establishing a sensing network by reusing a Wi-Fi infrastructure according to an embodiment of this application;
FIG. 7 is a diagram of optimizing a sensing network according to an embodiment of this application;
FIG. 8 is another diagram of optimizing a sensing network according to an embodiment of this application;
FIG. 9 is still another diagram of optimizing a sensing network according to an embodiment of this application;
FIG. 10 is a schematic flowchart of a method for establishing a sensing network according to an embodiment of this application;
FIG. 11 is a block diagram of an apparatus for establishing a sensing network according to an embodiment of this application; and
FIG. 12 is a block diagram of another apparatus for establishing a sensing network according to an embodiment of this application.

### DESCRIPTION OF EMBODIMENTS

The following describes the technical solutions in this application with reference to the accompanying drawings.

To clearly describe the technical solutions in embodiments of this application, terms such as "first" and "second" are used in the embodiments of this application to distinguish between same items or similar items that provide basically same functions or purposes, and a sequence of the same items or similar items is not limited. A person skilled in the art may understand that the terms such as "first" and "second" do not limit a quantity or an execution sequence, and the terms such as "first" and "second" do not indicate a definite difference.

It should be noted that, in this application, terms such as "example" or "for example" are used for representing giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

In addition, "at least one" means one or more, and "a plurality of" means two or more. In addition, "and/or" describes an association between associated objects, and indicates that three relationships may exist. For example, A and/or B may represent the following cases: Only A exists, both A and B exist, and only B exists, where A and B may be singular or plural. The character "/" usually indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

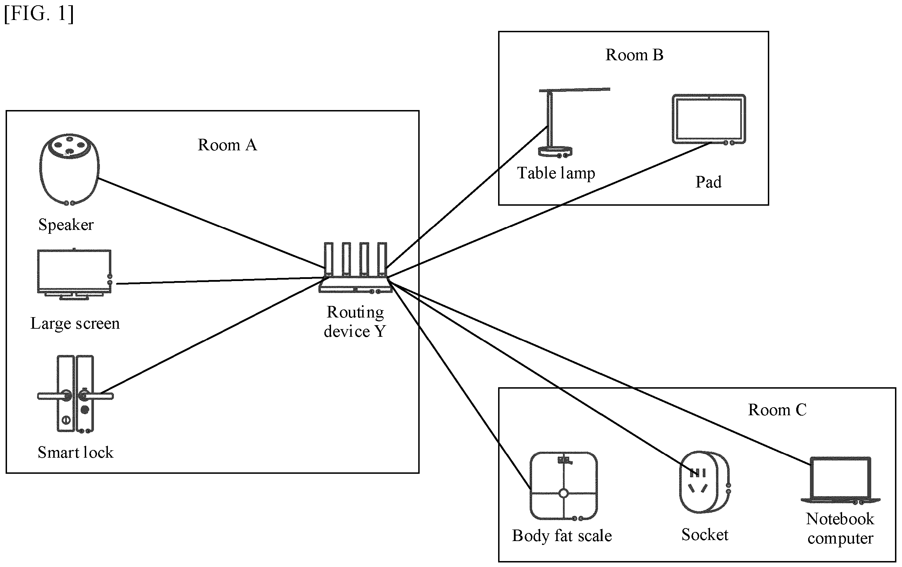

FIG. 1 is a diagram of a home Wi-Fi communication networking environment. As shown in FIG. 1, a whole-house Wi-Fi communication network is provided for a user in a whole-house intelligent scenario. Each terminal device in the home is connected to a routing device Y, and accesses the Internet by using the routing device Y. The terminal device connected to the routing device Y may be referred to as a connected device of the routing device Y, and may be referred to as a connected device for short.

The whole-house intelligent scenario shown in FIG. 1 includes a room A, a room B, and a room C. Terminal devices in the room A include a speaker, a large screen, and a smart lock. Terminal devices in the room B include a table lamp and a tablet computer (Pad). Terminal devices in the room C include a body fat scale, a socket, and a notebook computer.

It should be understood that the terminal device in the room is merely an example, and the whole-house intelligent scenario may include any terminal device having a Wi-Fi communication capability. This is not limited in embodiments of this application.

From the perspective of services, the whole-house intelligent scenario includes "rich" ecosystem and "true" intelligence. The "true" intelligence requires construction of dynamic intelligence based on all scenarios to break through a current situation of "weak" intelligence and "pseudo" intelligence in the smart home industry and surpass expected experience of a user.

From the technical perspective, the key to dynamic "true" intelligence lies in user context awareness. However, in the whole-house intelligent scenario, if the user does not wear or hold a specific device, it is difficult to continuously aware a user context in the conventional technology in the industry, and fragmented products and services cannot be accurately combined and pushed.

To implement dynamic context awareness in the whole-house intelligent scenario, in an existing solution, the user may purchase a sensing device, and establish a sensing network by reusing a whole-house Wi-Fi infrastructure.

It should be understood that, Wi-Fi divides, by using an orthogonal frequency division multiplexing (orthogonal frequency division multiplexing, OFDM) technology, a communication channel used by Wi-Fi into a plurality of mutually orthogonal subcarriers. Because an environment and a moving object have different capabilities of absorbing and reflecting subcarriers of different frequencies, strengths of subcarriers that arrive at a receiver are also different. In addition, diffraction, scattering, multipath superposition, and the like further make a signal strength difference change significantly. In this way, even a very small action or a small change in the environment can make CSI data obtained by the receiver change significantly. In the communication field, CSI is a channel attribute of a communication link between two devices, and describes a fading factor, for example, information such as signal scattering, environment fading, and distance fading, of a signal on each transmission path.

Based on the foregoing technical principle, a sensing device is deployed in the home, and a change in the environment, for example, whether there is a person moving in the environment, can be sensed by measuring CSI between the sensing device and a terminal device connected to home-specified Wi-Fi.

Based on FIG. 1, the user may add a sensing device X in the home, where the sensing device X has both a Wi-Fi sensing capability and a Wi-Fi routing capability. When deploying the sensing device X, the user can select either of the following networking modes.

Networking mode 1: The routing device Y and the sensing device X are used at the same time in the home, some terminal devices in the home are disconnected from the routing device Y, and the some terminal devices are connected to the sensing device X.

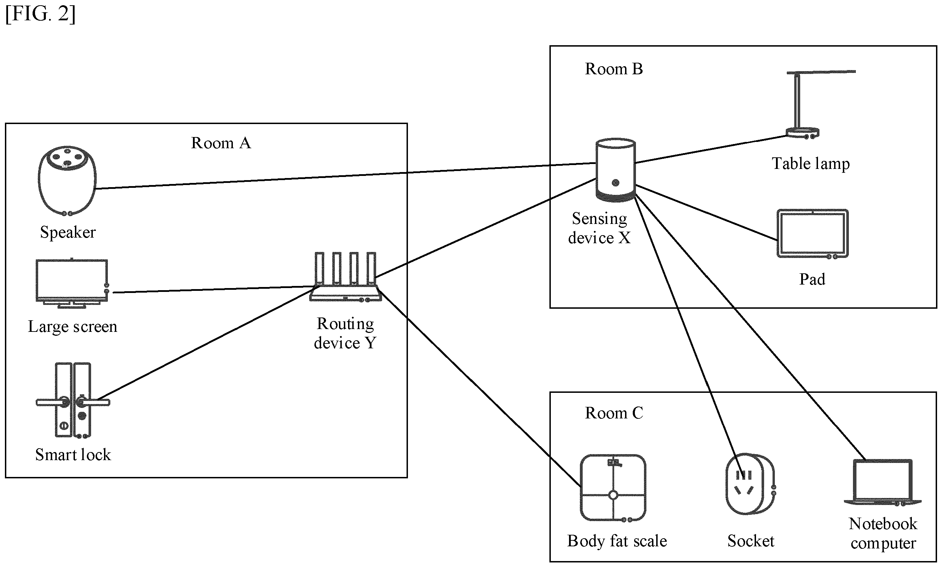

FIG. 2 is a diagram of establishing a sensing network by reusing a Wi-Fi infrastructure. As shown in FIG. 2, in comparison with FIG. 1, a whole-house intelligent scenario includes both a sensing device X and a routing device Y. The routing device Y is located in a room A, the sensing device X is located in a room B, and the sensing device X is connected to the routing device Y. When a user establishes the sensing network by using the sensing device X and the whole-house Wi-Fi infrastructure, to cover the whole house as much as possible, the user may select some or all terminal devices in each room to connect to the sensing device X. For example, the user may disconnect a speaker in the room A from the routing device Y, and connect the speaker to the sensing device X; disconnect a table lamp and a pad in the room B from the routing device Y, and connect the table lamp and the pad to the sensing device X; and disconnect a socket and a notebook computer in a room C from the routing device Y, and connect the socket and the notebook computer to the sensing device X.

The networking manner 1 may cause a problem that some terminal devices are not connected nearby. Consequently, communication quality of the some terminal devices is degraded, and communication experience is affected. For example, the speaker in the room A is originally connected to the routing device Y. After the speaker is disconnected from the routing device Y and then connected to the sensing device X, a distance between the speaker and the sensing device X is longer than a distance between the speaker and the routing device Y, that is, the speaker is not connected nearby. This may affect communication experience of the speaker.

To avoid affecting communication experience of a terminal device in the home, the user may further select a networking manner 2, replace the routing device Y with the sensing device X, disconnect all terminal devices in the home from the routing device Y, and connect the terminal devices to the sensing device X.

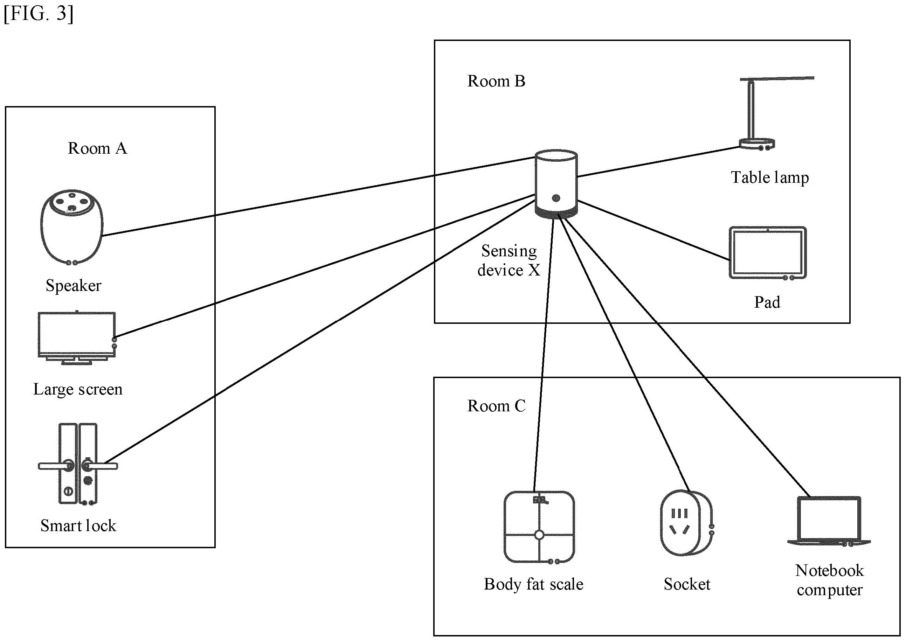

FIG. 3 is another diagram of establishing a sensing network by reusing a Wi-Fi infrastructure. As shown in FIG. 3, in comparison with FIG. 1, a whole-house intelligent scenario includes a sensing device X, and all terminal devices originally connected to a routing device Y are connected to the sensing device X. For example, a user may deploy the sensing device X at an original location (namely, in a room A) of the routing device Y.

Regardless of the networking manner, the terminal device needs to be connected to the sensing device X. This limits a product form of the sensing device X, and requires the sensing device X to act as an AP. In addition, the user needs to disconnect some or all of the terminal devices from the routing device Y, manually specify a terminal device that is connected to the sensing device X, and reconfigure a connection to the sensing device X. Such an operation is complex, and brings operation troubles to some users.

An objective of communication networking in the home is to make quality of communication between the routing device Y and each terminal device as good as possible, and a path to each terminal device as short as possible. An objective of deploying the sensing device X is to cover the whole house as much as possible, to implement dynamic situational awareness in the whole-house intelligent scenario. Both the networking manner 1 and the networking manner 2 essentially change an original route of the terminal device in the home. This affects an original Wi-Fi communication network in the home. To be specific, two networks are not independent, and communication quality may deteriorate when the two networks coexist. Therefore, how to quickly establish, without affecting existing routing networking, a sensing network that is independent of the Wi-Fi communication network and that does not interfere with the Wi-Fi communication network, and facilitate a user operation is an urgent problem to be resolved.

In an existing solution, it is considered that a packet needs to be sent between devices based on an internet protocol (internet protocol, IP) address, and CSI can be obtained. This is an essence of a technical limitation of the existing solution. Actually, according to a specification of the 802.11 protocol, a packet can also be transmitted between devices based on a MAC address. For example, a device A knows a MAC address of a device B. Therefore, the device A may send a packet to the device B based on the MAC address of the device B. After receiving the packet, the device B feeds back acknowledgement (acknowledge, ACK) information to the device A, and the device A may measure CSI between the device A and the device B based on the ACK information. It can be learned that the sensing device X is considered as a router in the industry only to obtain CSI.

In view of this, embodiments of this application provide a method for establishing a sensing network and a related apparatus. A sensing device may obtain a MAC address of a terminal device connected to existing home-specified Wi-Fi in an environment, send, based on the obtained MAC address, a packet to the terminal device connected to the existing home-specified Wi-Fi, and measure CSI based on ACK information for the packet. In this way, a sensing network can be quickly established without affecting existing Wi-Fi routing networking, to implement context awareness in a whole-house intelligent scenario.

In embodiments of this application, a Wi-Fi CSI sensing network is quickly established in a whole-house scenario based on a non-contact sensing capability of a wireless signal (Wi-Fi), so that new non-contact health sensing experience and new interaction can be provided for a user. In addition, a sensing result and 1+8+N device dynamic intelligent linkage provide the user with brand-new experience that is easier to sense and that surpasses an expectation. This breaks through a current situation of "weak" intelligence and "pseudo" intelligence in the smart home industry and supports an implementation of whole-house intelligence.

The packet sent by the sensing device to the terminal device based on the MAC address may be any type of packet. After receiving the packet, the terminal device feeds back an ACK to the sensing device. For example, the following uses a probe packet as an example for description.

The sensing device and a routing device (for example, a router) in embodiments of this application are two separate devices. Because the sensing device may directly send a packet based on a MAC address in the technical solution of this application, the sensing device may be any device having a Wi-Fi communication capability. The sensing device X may serve as an AP, or may serve as a STA. This is not limited in embodiments of this application.

The sensing device in embodiments of this application may be any handheld device, vehicle-mounted device, or the like having a Wi-Fi chip. Some examples of the sensing device are: a mobile internet device (mobile internet device, MID) like a mobile phone (mobile phone), a tablet computer (Pad), a smart television, a notebook computer, a palmtop computer, a table lamp, a body fat scale, a speaker, a router, a large screen, a socket, a smart lock, a smart bulb, a smart stylus, smart glasses, an air purifier, a humidifier, a camera, a smart switch, a sweeper, a band, a charger, a headset, and a car, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network or a terminal device in a future evolved public land mobile network (public land mobile network, PLMN), and the like. A specific technology and a specific device form used by the terminal device are not limited in embodiments of this application.

By way of example, and not limitation, in embodiments of this application, the sensing device may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that are dedicated to only one type of application and need to be used together with other devices such as smartphones, such as various smart bands or smart jewelry for monitoring physical signs.

It should be understood that, in embodiments of this application, the sensing device may be an apparatus configured to implement a function of the sensing device, or may be an apparatus that can support the sensing device in implementing the function, for example, a chip system. The apparatus may be installed in the sensing device. In embodiments of this application, the chip system may include a chip, or may include a chip and another discrete component.

Embodiments of this application may be applied to a whole-house intelligence scenario. In this scenario, a home may include a plurality of terminal devices that support Wi-Fi, for example, a mobile phone, a pad, a table lamp, a body fat scale, a speaker, a router, a large screen, a socket, a smart lock, a notebook computer, a smart bulb, a smart stylus, smart glasses, an air purifier, a humidifier, a camera, a smart switch, a sweeper, a band, a charger, and a headset.

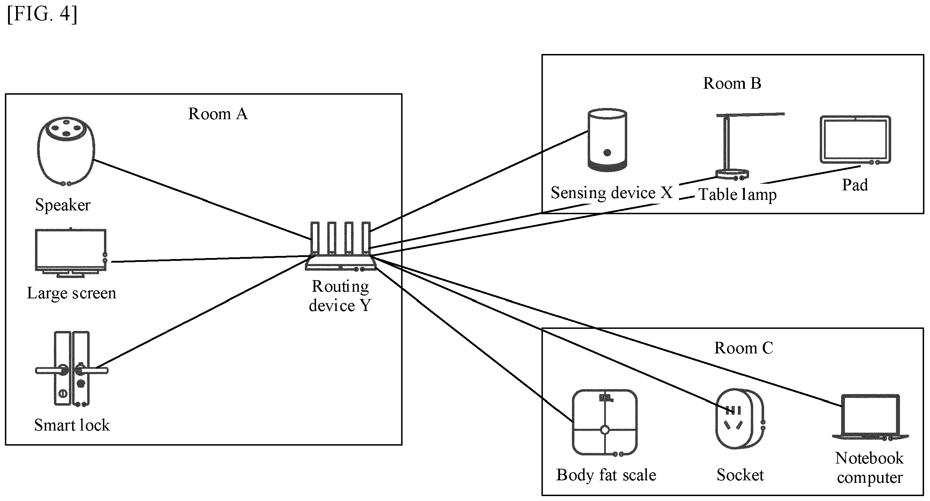

FIG. 4 is a diagram of establishing a sensing network by reusing a Wi-Fi infrastructure according to an embodiment of this application. As shown in FIG. 4, a room A includes a speaker, a large screen, and a smart lock, a room B includes a table lamp and a pad, and a room C includes a body fat scale, a socket, and a notebook computer. For example, a routing device Y is deployed in the room A, a sensing device X is deployed in the room B, and all terminal devices shown in the room A, the room B, and the room C are connected to the routing device Y.

After a user deploys the sensing device X in the room B and turns on the sensing device X, the user may log in to a setting interface of the sensing device X by using a mobile phone, and enter a service set identifier (service set identifier, SSID) and a network access password of the routing device Y, for the sensing device X to access a network of the routing device Y.

Optionally, if the sensing device X is a device with a touchscreen, a user may further enter an SSID and a network access password of the routing device Y on a setting interface of the sensing device X, to access a network of the routing device Y.

After the sensing device X is connected to the routing device Y, the sensing device X may broadcast an ARP request packet to the terminal device in the home by using the routing device Y. After receiving the ARP request packet, the terminal device in the home may send an ARP response packet to the sensing device X by using the routing device Y, where the ARP response packet includes a MAC address of the terminal device. After obtaining the MAC address of the terminal device in the home, the sensing device X stores the obtained MAC address to obtain a MAC address list.

An ARP protocol is a protocol in which a MAC address is obtained based on an IP address. Because the sensing device X is connected to the routing device Y, the sensing device X may know an IP address of a connected device, but does not know a MAC address of the connected device. Because the sensing device X and the connected device are in a same broadcast domain, the sensing device X may broadcast an ARP request packet by using the routing device Y. After receiving the ARP request packet, the connected device checks a packet header of the ARP packet. If a destination IP address in the packet header is an IP address of the connected device, the connected device buffers a source MAC address in the packet header (namely, a MAC address of the sensing device X) to an ARP table of the connected device, and sends, to the sensing device X, an ARP response packet carrying a MAC address of the connected device. The ARP response packet sent by the connected device is not a broadcast packet but a unicast packet whose destination address is the MAC address of the sensing device X.

It should be understood that not all the terminal devices send ARP response packets to the sensing device X. Some terminal devices may not receive the ARP request packet due to power failures, device faults, or the like, or receive the ARP request packet but do not send ARP response packets to the sensing device X.

For example, the sensing device X broadcasts the ARP request packet to all the terminal devices in the room A, the room B, and the room C by using the routing device Y. The speaker in the room A receives the ARP request packet, and sends an ARP response packet to the sensing device X by using the routing device Y, where the ARP response packet sent by the speaker includes a MAC address of the speaker. The terminal devices in the room B and the room C each send an ARP response packet to the sensing device X by using the routing device Y, and the ARP response packet fed back by each terminal device includes a MAC address of the terminal device.

For ease of differentiation, in this embodiment of this application, all devices connected to the routing device Y are referred to as first terminal devices, and there is at least one first terminal device. A terminal device that is in the connected devices and that sends an ARP response packet to the sensing device X is referred to as a second terminal device, and there is at least one second terminal device. The first terminal devices include the second terminal device. In FIG. 4, the first terminal devices include the speaker, the large screen, the smart lock, the table lamp, the pad, the body fat scale, the socket, and the notebook computer, and the second terminal devices include the speaker, the table lamp, the pad, the body fat scale, the socket, and the notebook computer.

Optionally, the sensing device X may periodically broadcast the ARP request packet by using the routing device Y, so that the stored MAC address list can be updated.

For example, MAC addresses of the second terminal devices currently stored in the sensing device X include the MAC address of the speaker, a MAC address of the table lamp, a MAC address of the pad, a MAC address of the body fat scale, a MAC address of the socket, and a MAC address of the notebook computer. After the sensing device X periodically broadcasts the ARP request packet by using the routing device Y, the table lamp may be powered off. In this case, the table lamp cannot send an ARP response packet to the sensing device X. It is assumed that all terminal devices other than the table lamp in the current second terminal devices can normally respond. After receiving ARP response packets of the other terminal devices, the sensing device X updates the stored MAC address list. An updated MAC address list includes: the MAC address of the speaker, the MAC address of the pad, the MAC address of the body fat scale, the MAC address of the socket, and the MAC address of the notebook computer, that is, second terminal devices after the updating includes the speaker, the pad, the body fat scale, the socket, and the notebook computer.

For example, the sensing device X currently stores the MAC addresses of the second terminal devices, including: the MAC address of the speaker, the MAC address of the table lamp, the MAC address of the pad, the MAC address of the body fat scale, the MAC address of the socket, and the MAC address of the notebook computer. After the sensing device X periodically broadcasts the ARP request packet by using the routing device Y, the large screen that does not send an ARP response packet to the sensing device X before may send, to the sensing device X in a current periodicity, an ARP response packet carrying a MAC address of the large screen. It is assumed that the current second terminal devices include at least one terminal device that can normally respond. In this case, an updated MAC address list of the sensing device X includes: the MAC address of the speaker, the MAC address of the pad, the MAC address of the body fat scale, the MAC address of the socket, the MAC address of the notebook computer, and the MAC address of the large screen, that is, second terminal devices after updating include the speaker, the table lamp, the pad, the body fat scale, the socket, the notebook computer, and the large screen.

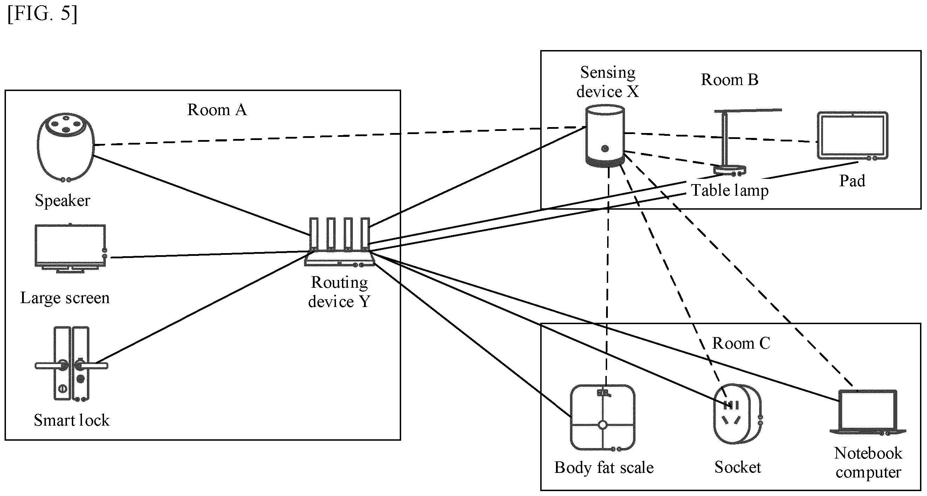

FIG. 5 is a diagram of obtaining CSI by reusing the Wi-Fi infrastructure according to an embodiment of this application. As shown in FIG. 5, after receiving ARP response packets sent by the second terminal devices, the sensing device X may send a probe packet to each terminal device in the second terminal devices based on a MAC address of each terminal device in the second terminal devices. After the sensing device X sends the probe packet, third terminal devices in the second terminal devices may send acknowledgement ACK information for the probe packet to the sensing device X. Then, the sensing device X measures CSI between the sensing device X and each third terminal device in the third terminal devices based on the ACK information fed back by the third terminal devices, and performs context awareness based on the CSI.

It should be understood that all or some of the second terminal devices send ACK information for the probe packet to the sensing device X. In this embodiment of this application, a terminal device that is in the second terminal devices and that feeds back the ACK information to the sensing device X may be referred to as a third terminal device, and there is at least one third terminal device. The second terminal devices include the third terminal device.

For example, in FIG. 5, if the speaker, the table lamp, the pad, the body fat scale, the socket, and the notebook computer all feed back ACK information to the sensing device X, the third terminal devices include the speaker, the table lamp, the pad, the body fat scale, the socket, and the notebook computer.

Optionally, if the sensing device X receives ACK information fed back by some terminal devices in the second terminal devices, that is, there is a terminal device that does not feed back ACK information to the sensing device X, the sensing device X may broadcast an ARP request packet again by using a routing device, and refresh a stored MAC address list after obtaining an ARP response packet.

It should be understood that, after obtaining the ACK information fed back by the third terminal devices for the probe packet, the sensing device X completes establishment of a sensing network. The sensing device X may measure the CSI between the sensing device X and each terminal device in the third terminal devices based on the ACK information, and perform context awareness based on the CSI.

Optionally, the sensing device X may send the probe packet in a TDLS manner. In this manner, the sensing device X may directly send the probe packet to each terminal device in the second terminal devices in a point-to-point manner with assistance of the routing device Y.

It should be understood that TDLS is a wireless standard launched by the Wi-Fi Alliance, and allows two devices to be directly connected in a point-to-point manner through a Wi-Fi network. Data transmitted between the two devices does not need to be forwarded by a router. Because the sensing device X and the second terminal device are connected to the routing device Y and are in a same Wi-Fi network, the sensing device X and the second terminal device may establish a TDLS connection through the Wi-Fi network, to perform point-to-point data transmission. This manner helps improve packet transmission efficiency.

A TDLS procedure includes TDLS discovery (TDLS discovery) and TDLS setup (TDLS setup). The following uses a TDLS procedure between the sensing device X and the speaker in the room A in FIG. 5 as an example for description.

If the sensing device X expects to directly send a probe packet to the speaker in a point-to-point manner, the sensing device X may send a TDLS discovery request to the speaker by using the routing device Y, to request to start TDLS discovery. If the speaker also supports TDLS, the speaker may send a TDLS discovery (TDLS discovery) response to the sensing device X, to provide performance information of the speaker, for example, information such as a supported rate and channel.

After TDLS discovery is completed, the sensing device X starts to establish a TDLS connection to the speaker by using the routing device Y. The sensing device X first sends a TDLS setup request to the speaker by using the routing device Y, where the TDLS setup request may include performance information of the sensing device X. After receiving the TDLS setup request, the speaker may send a TDLS setup response to the sensing device X by using the routing device Y, where the TDLS setup response may include the performance information and a status code of the speaker. The status code indicates that the TDLS setup request is accepted or rejected. The sensing device X receives the TDLS setup response. If the status code in the TDLS setup response indicates that the TDLS setup request is accepted, the sensing device X sends a TDLS confirm frame (TDLS confirm frame) to the speaker by using the routing device Y. In this case, the TDLS connection between the sensing device X and the speaker is established, and point-to-point direct communication can be performed.

Optionally, the sensing device X may send the probe packet in an air interface injection (injection) manner. In this manner, the sensing device X may directly send the probe packet to each terminal device in the second terminal devices without assistance of the routing device Y.

Based on the technical solution provided in this embodiment of this application, the terminal device in the home does not need to be disconnected from the routing device Y and then connect to the sensing device X. Therefore, a device form of the sensing device X is not limited, and the sensing device X may be any device having a Wi-Fi communication capability. The sensing network established in this embodiment of this application and an original home Wi-Fi communication network are two independent networks, and do not interfere with each other, and the terminal device in the home maintains a networking relationship with the routing device Y. This helps resolve a problem of a sensing and communication conflict, and avoid impact on communication quality of the terminal device for sensing. In addition, for the user, the user does not need to manually disconnect the terminal device in the home from the routing device Y and then connect the terminal device to the sensing device X, but only needs to enter an SSID and a network access password of the routing device Y. This manner is simple and convenient, and the user can quickly get started.

The foregoing describes an embodiment of establishing the sensing network with reference to FIG. 4 and FIG. 5. In this embodiment, the sensing device X needs to be connected to the routing device Y, obtains the MAC address of the terminal device in the home by using the routing device Y, and then sends the probe packet to the terminal device in the home based on the MAC address. After receiving the ACK information for the probe packet, the sensing device X performs context awareness based on the measured CSI.

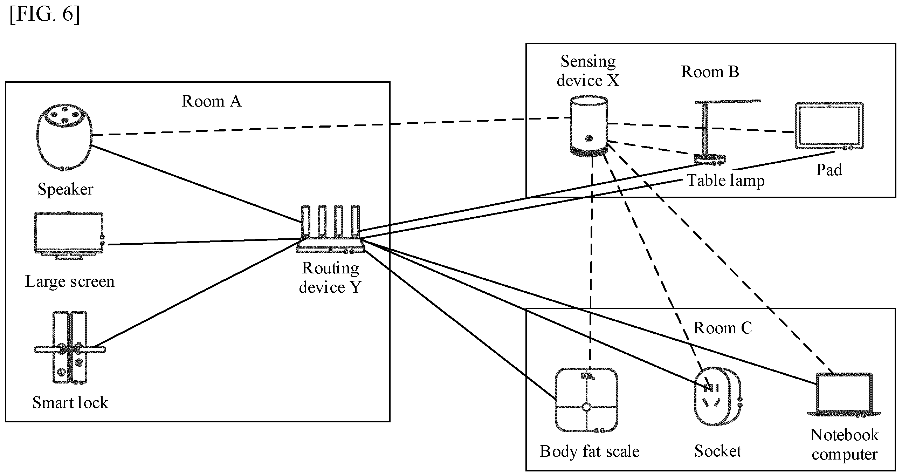

The following describes another embodiment of establishing a sensing network with reference to FIG. 6. In this embodiment, a user needs to select only an SSID of a home routing device Y, and does not need to perform an additional operation, and a sensing device X does not need to be connected to the routing device Y.

FIG. 6 is another diagram of establishing a sensing network by reusing a Wi-Fi infrastructure according to an embodiment of this application. As shown in FIG. 6, a room A includes a speaker, a large screen, and a smart lock, a room B includes a table lamp and a pad, and a room C includes a body fat scale, a socket, and a notebook computer. For example, a routing device Y is deployed in the room A, a sensing device X is deployed in the room B, and all terminal devices shown in the room A, the room B, and the room C are connected to the routing device Y.

The routing device Y may periodically broadcast a beacon frame to the outside, to notify the outside of existence of a Wi-Fi network of the routing device Y. The beacon frame includes information such as a service set identifier SSID, a MAC address, and an operating frequency band of the routing device Y.

For example, after a user turns on the sensing device X, the sensing device X may receive the beacon frame from a transmit end of the routing device Y, and obtain the SSID, the MAC address, and the operating frequency band of the routing device Y from the beacon frame.

For example, a mobile phone of the user is connected to the routing device Y through Wi-Fi, and is connected to the sensing device X through Bluetooth. The routing device Y periodically broadcasts the beacon frame to the outside. The mobile phone receives the beacon frame of the routing device Y, and the user selects the SSID of the routing device Y in the home on the mobile phone. In this case, the mobile phone obtains the operating frequency band and the MAC address of the routing device Y that correspond to the SSID of the routing device Y, and sends the operating frequency band and the MAC address of the routing device Y to the sensing device X through Bluetooth.

After obtaining the operating frequency band and the MAC address of the routing device Y, the sensing device X determines, based on the operating frequency band of the routing device Y, a MAC address of a terminal device that communicates with the routing device Y. Terminal devices that are connected to the routing device Y in the home include the terminal device that communicates with the routing device Y.

In this embodiment of this application, the terminal device that is determined by the sensing device X and that communicates with the routing device Y may be referred to as a second terminal device, and there is at least one second terminal device. A definition of the second terminal device described for FIG. 6 is different from a definition of the second terminal device described for FIG. 4 and FIG. 5.

Optionally, the sensing device X listens to an air interface packet for communication with the routing device Y on the operating frequency band of the routing device Y, obtains a source MAC address of an air interface packet that is in all air interface packets and whose destination MAC address is the MAC address of the routing device Y, stores the obtained source MAC address, and obtains a MAC address list.

Before listening, the sensing device X may set a wireless network interface card to a promiscuous (monitor) mode. In the promiscuous mode, the sensing device X may receive all data packets that pass through the wireless network interface card of the sensing device X, regardless of whether a destination address of the data packet is an address of the sensing device X. In this way, the sensing device X may listen to the air interface packet for communication with the routing device Y on the operating frequency band of the routing device Y, and obtain information carried in a packet header of the air interface packet.

For example, the speaker sends an air interface packet to the routing device Y. A packet header of the air interface packet includes a source MAC address and a destination MAC address. The source MAC address is a MAC address of the speaker, and the destination MAC address is a destination address of the routing device Y. The sensing device X listens to an air interface packet transmitted on the operating frequency band of the routing device Y. If it is detected, through listening, that a destination MAC address in a packet header of the air interface packet is the MAC address of the routing device Y, the sensing device X obtains a source MAC address from the packet header of the air interface packet, and stores the source MAC address. The source MAC address is the MAC address of the speaker. Subsequently, the sensing device X may send a probe packet to the speaker based on the MAC address of the speaker, to obtain CSI.

Optionally, the sensing device X listens to an air interface packet for communication with the routing device Y on the operating frequency band of the routing device Y, obtains a destination MAC address of an air interface packet that is in all air interface packets and whose source MAC address is the MAC address of the routing device Y, stores the obtained destination MAC address, and obtains a MAC address list.

For example, the routing device Y sends an air interface packet to the notebook computer. A packet header of the air interface packet includes a source MAC address and a destination MAC address. The source MAC address is the MAC address of the routing device Y, and the destination MAC address is a MAC address of the notebook computer. The sensing device X listens to an air interface packet transmitted on the operating frequency band of the routing device Y. If it is detected, through listening, that a source MAC address in a packet header of the air interface packet is the MAC address of the routing device Y, the sensing device X obtains a destination MAC address from the packet header of the air interface packet, and stores the destination MAC address. The destination MAC address is the MAC address of the notebook computer. Subsequently, the sensing device X may send a probe packet to the notebook computer based on the MAC address of the notebook computer, to obtain CSI.

Optionally, the sensing device X may periodically listen to an air interface packet for communication with the routing device Y on the operating frequency band of the routing device Y. In this case, a stored MAC address list may be updated.

After obtaining MAC addresses of the second terminal devices, the sensing device X may send a probe packet to each terminal device in the second terminal devices based on the MAC addresses of the second terminal devices, and receive ACK information of a third terminal device for the probe packet, to measure CSI between the sensing device X and the third terminal device.

It should be understood that some terminal devices in the second terminal devices may not receive the probe packet, or receive the probe packet but do not send ACK information for the probe packet to the sensing device X. In this embodiment of this application, a terminal device that is in the second terminal devices and that sends ACK information for the probe packet to the sensing device X is referred to as a third terminal device, and there is at least one third terminal device.

Optionally, in the embodiment described for FIG. 6, because the sensing device X is not connected to the routing device Y, the probe packet cannot be sent in a TDLS manner. However, the sensing device X may directly send the probe packet to each terminal device in the second terminal devices in an air interface injection (injection) manner.

Optionally, if a terminal device does not send ACK information for the probe packet to the sensing device X, the sensing device X may listen to an air interface packet for communication with the routing device Y on the operating frequency band of the routing device Y again. In this case, a stored MAC address list may be updated.

Based on the technical solution provided in this embodiment of this application, the terminal device in the home does not need to be disconnected from the routing device Y and then connect to the sensing device X. Therefore, a device form of the sensing device X is not limited, and the sensing device X may be any device having a Wi-Fi communication capability. The sensing network established in this embodiment of this application and an original home Wi-Fi communication network are two independent networks, and do not interfere with each other, and the terminal device in the home maintains a networking relationship with the routing device Y. This helps resolve a problem of a sensing and communication conflict, and avoid impact on communication quality of the terminal device for sensing.

In addition, for the user, the user does not need to manually disconnect the terminal device in the home from the routing device Y and then connect the terminal device to the sensing device X, and does not need to connect the sensing device X to the routing device Y, but only needs to specify the SSID of the routing device Y in the home. This manner is simple and convenient, and the user can quickly get started.

After the sensing network is established, the sensing network may be applied to a plurality of smart scenarios, for example, home security protection, energy consumption management, health care, and audio and video entertainment.

In the home security protection scenario, the user knows layout locations of a plurality of terminal devices in the home. For example, the sensing device X and the large screen are located in a living room, and the table lamp is located in a bedroom. If the sensing device X senses, based on ACK information of the large screen for a probe packet, that there is a person moving in the living room, the sensing device X may notify the user that there is a person moving in the living room. A notification manner may include: The sensing device X sends an instruction to the mobile phone, the speaker, the pad, a security protection device, or the like that is connected (for example, connected through Bluetooth) to the sensing device X, and a device that receives the instruction may send a text or audio notification to the user. Alternatively, the sensing device sends a notification message to a whole-house intelligent host, to notify that there is a person moving in the home, and the whole-house intelligent host may control the security protection device to take a corresponding measure.

In the energy consumption management scenario, for example, the sensing device X receives ACK information of a terminal device in the home for a probe packet, and senses, based on CSI obtained through measurement based on the ACK information, that there is no one in the home, but a table lamp is still on. In this scenario, for example, the sensing device X may send a notification message to a whole-house intelligent host, to notify that the table lamp in the home is not turned off, and the whole-house intelligent host may control the table lamp to be turned off. Alternatively, when the sensing device X determines that there is no one in the home, but the table lamp is still on, the sensing device X may control the table lamp to be turned off.

In the health care scenario, for example, there is an elderly living alone in the home, and the elderly usually gets up at approximately 7:00 a.m. and moves in the living room. If the sensing device X receives, within a period of time after 7:00 a.m., ACK information of a terminal device in the living room for a probe packet, and senses, based on CSI obtained through measurement based on the ACK information, that no one is moving in the living room, the sensing device X may remotely remind a guardian of the elderly to pay attention to a health status of the elderly.

In the audio and video entertainment scenario, for example, after the user enters a door, a smart switch near a home door sends ACK information for a probe packet to the sensing device X. The sensing device X senses, based on CSI measured based on the ACK information, that there is a person moving, and may control a smart switch in the living room to turn on a light in the living room, and turn on a terminal device like the large screen in the living room. If the user moves from the living room to a primary bedroom, the sensing device X may receive ACK information that is for the probe packet and that is sent by a terminal device deployed in a space from the living room to the primary bedroom, and may determine information such as a moving direction and a moving speed of the user based on CSI obtained through measurement based on the ACK information. After sensing that there is a person moving toward the primary bedroom, or sensing that there is a person moving in the primary bedroom, the sensing device X may turn on a terminal device like a light, a large screen, or a speaker in the primary bedroom, to implement dynamic situational sensing of audio/video following a person.

The foregoing describes two methods for establishing the sensing network with reference to FIG. 4 to FIG. 6. After the sensing network is established, in an existing solution, the sensing device X maintains a same fixed sampling frequency for each terminal device in the second terminal devices. This causes a serious waste of power consumption, a computing capability (computing power), and the like of the sensing device X and the second terminal device. The sampling frequency indicates a frequency at which the sensing device X sends the probe packet.

It is found in an actual test scenario that, when the sampling frequency is 500 Hz, a power failure rate of the mobile phone can reach 30% all night, central processing unit (central processing unit, CPU) load of the sensing device X is 10% to 30%, and the sampling frequency is in a linear relationship with the CPU load of the sensing device X.

If the sensing device X always operates at a low sampling frequency, for example, 10 Hz, severe undersampling may be caused to a human activity process, and recognition accuracy is significantly reduced. However, if the sensing device X always operates at a high sampling frequency, for example, 500 Hz, power consumption and computing power are seriously wasted.

A limitation of the existing solution lies in that a feature of a sensing capability similarity behind a local similarity of a spatial location of a terminal device is not used, and a feature that the low sampling frequency also has a basic resolution capability is not used.

The sampling frequency is significantly related to a speed of a moving object (including a person) in an environment. When there is no person in the environment, the sensing device X may decrease the sampling frequency. When there is a person in the environment, the sensing device X may increase the sampling frequency as required. Based on this, an embodiment of this application provides a method for adaptively adjusting the sampling frequency. When a person moves in the home, the sensing device X may group terminal devices in same space (for example, a same room) for collaborative use, and use a low sampling frequency to perform initial screening on whether there is a person moving in the environment. When detecting that there is a person moving in the environment, the sensing device X may increase the sampling frequency to obtain more refined CSI, to provide a basis for subsequent activity classification and recognition.

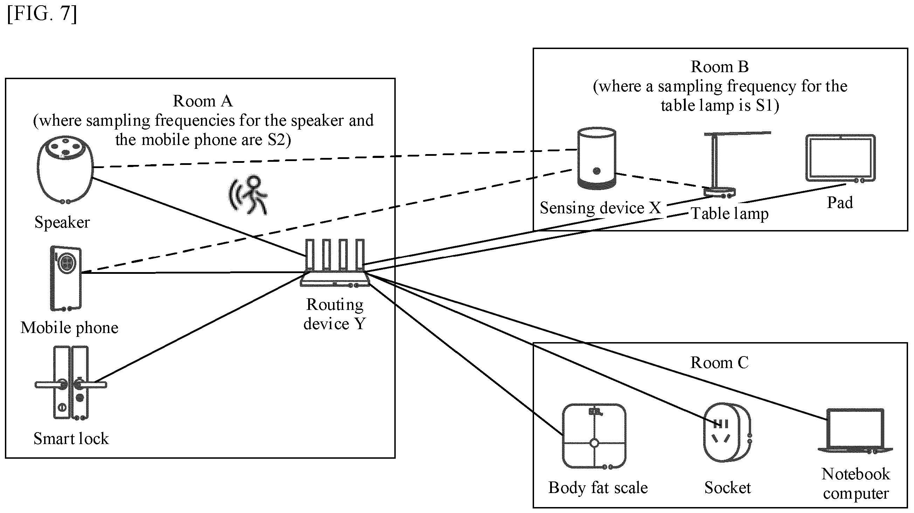

FIG. 7 is a diagram of optimizing a sensing network according to an embodiment of this application. As shown in FIG. 7, a room A includes a speaker, a mobile phone, and a smart lock, a room B includes a table lamp and a pad, and a room C includes a body fat scale, a socket, and a notebook computer. For example, a routing device Y is deployed in the room A, a sensing device X is deployed in the room B, and all terminal devices shown in the room A, the room B, and the room C are connected to the routing device Y.

As shown in FIG. 7, the sensing device X may send a probe packet to the speaker and the mobile phone in the room A, and send a probe packet to the table lamp in the room B. In an initial state, sampling frequencies of the sensing device X for the speaker, the mobile phone, and the table lamp are all set to S1, where S1 is a low sampling frequency.

For example, S1 is greater than or equal to twice a maximum resting breathing frequency of an adult, that is, 40 Hz to 60 Hz. The sensing device X may determine, based on a conventional technology, whether a moving target exists in a sensing range of a terminal device. If no moving target exists, the sampling frequency S1 remains unchanged. If the moving target exists, the sampling frequency is increased to S2.

As shown in FIG. 7, a person is moving in the room A. When determining, based on S1, that there is a person moving in the room A, the sensing device X increases the sampling frequencies for the speaker and the mobile phone in the room A to S2. In this case, a sampling frequency of the sensing device X for the terminal device in the room A is greater than sampling frequencies of the sensing device X for the terminal devices in the room B and the room C.

The foregoing describes a case in which the sensing device X sets different sampling frequencies for different rooms. The sensing device X may increase a sampling frequency for a terminal device in a room in which a person is moving, and maintain a low sampling frequency for a terminal device in a room in which no person is moving.

To further reduce power consumption of the sensing device X and the terminal device, the sensing device X may set different sampling frequencies for a plurality of terminal devices in a same room. Specifically, the user may specify a room in which a terminal device in the home is located, and configure which one of the plurality of terminal devices in the same room as a primary device and which one as a candidate device. When the sensing device X detects that there is a person moving in the room, the sensing device X may increase a sampling frequency for the primary device, and maintain a sampling frequency for a candidate device in the same room unchanged.

For example, the user may preferentially select a terminal device that is in the same room and that has long online time, a plug-in terminal device, or a terminal device at a fixed location as the primary device.

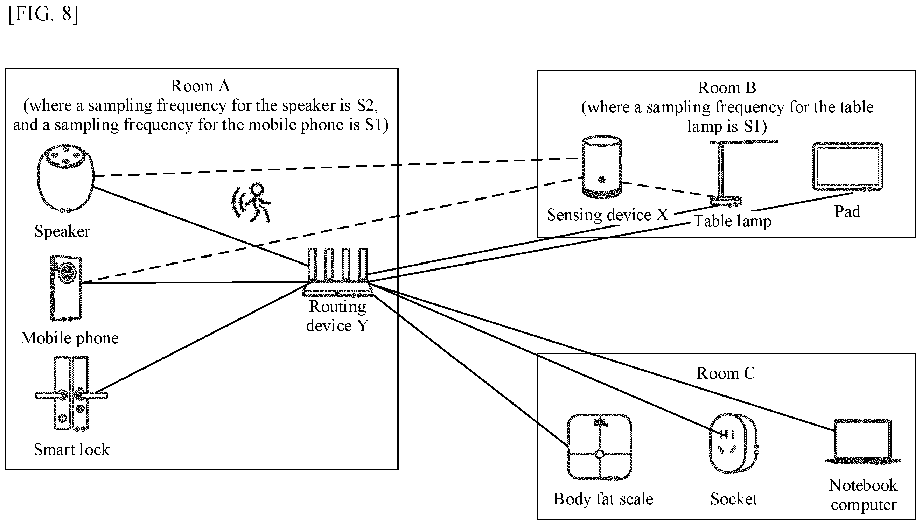

FIG. 8 is another diagram of optimizing a sensing network according to an embodiment of this application. As shown in FIG. 8, when a user moves to a room A, the user moves in the room A. When determining, based on S1, that there is a person moving in the room A, a sensing device X may select a speaker in the room A as a primary device and a mobile phone as a candidate device, increase a sampling frequency for the speaker used as the primary device in the room A to S2, and maintain a sampling frequency for the mobile phone unchanged at S1. A sampling frequency of the sensing device X for a table lamp in a room B also remains unchanged at S1.

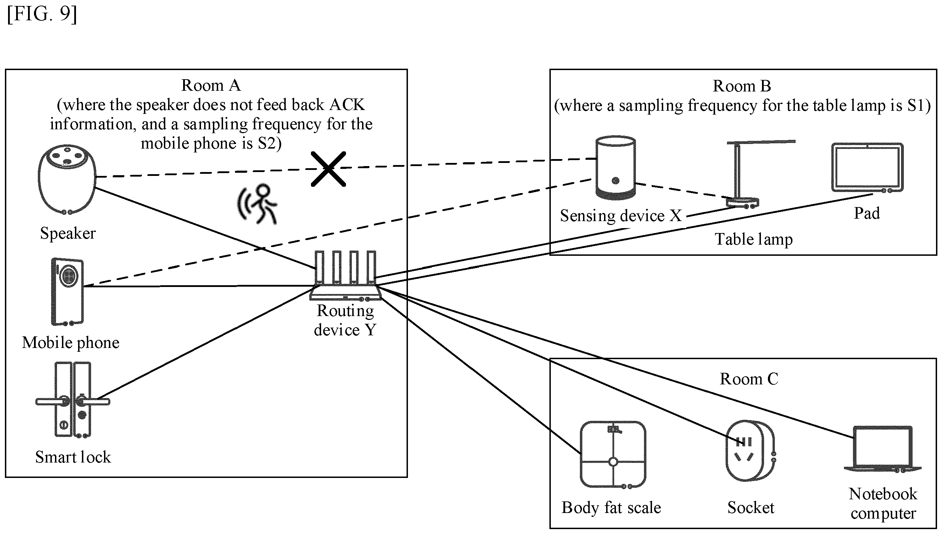

FIG. 9 is still another diagram of optimizing a sensing network according to an embodiment of this application. If a speaker is used as a primary device in a room A cannot send ACK information for a probe packet to a sensing device X due to some reasons (for example, a power failure, a network exception, or a device fault), the sensing device X may select an online candidate device as a temporary primary device. In FIG. 9, a mobile phone is selected as the temporary primary device. The sensing device X increases a sampling frequency for the mobile phone to S2, and sends a probe packet to the mobile phone at the sampling frequency S2 until the speaker recovers. After the speaker recovers, the sensing device X restores the sampling frequencies for the mobile phone and the speaker to S1, and increases the sampling frequency for the speaker to S2 when determining, based on S1, that there is a person moving in the room A.

It should be understood that, in FIG. 7 and FIG. 8, because the sensing device X does not obtain the MAC addresses of the smart lock, the pad, the body fat scale, the socket, and the notebook computer, the sensing device X cannot send the probe packet to these terminal devices, that is, sampling frequencies of the sensing device X for these terminal devices is 0. After the sensing device X periodically refreshes the MAC address list, a refreshed MAC address list may include the MAC addresses of all or some of these terminal devices. In this way, the sensing device X may send a probe packet to all or some of these terminal devices to perform context sensing.

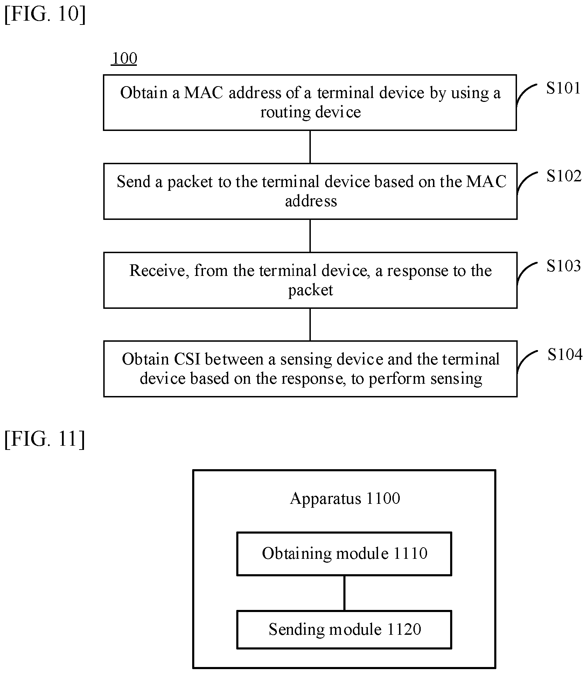

In conclusion, as shown in FIG. 10, an embodiment of this application provides a method 100 for establishing a sensing network. The method 100 may be applied to the network architecture shown in FIG. 4 or FIG. 6. However, this is not limited in embodiments of this application. Steps of the method 100 may be performed by a sensing device. The method 100 includes S101 to S104. Specific steps are as follows.

S101: Obtain a MAC address of a terminal device by using a routing device, where the terminal device is connected to the routing device.

In this embodiment of this application, a terminal device connected to the routing device, for example, the speaker, the large screen, the table lamp, the smart lock, the pad, the body fat scale, the socket, or the notebook computer in FIG. 4 or FIG. 6, is used as an example.

There are two implementations in which the sensing device obtains the MAC address of the terminal device by using the routing device.

Manner 1: The sensing device is connected to the routing device; the sensing device broadcasts an ARP request packet by using the routing device; and the sensing device receives an ARP response packet of the terminal device from the routing device, where the ARP request packet includes the MAC address of the terminal device.

In this manner, the sensing device may be connected to the routing device, and receive the ARP response packet of the terminal device forwarded by the routing device, to obtain the MAC address of the terminal device. It should be understood that, in this manner, obtaining the AMC address of the terminal device by using the routing device requires assistance of the routing device in forwarding the ARP request packet and the ARP response packet. For details, refer to the foregoing embodiment described for FIG. 4. Details are not described herein again.

Manner 2: The sensing device receives a MAC address and an operating frequency band of the routing device; and the sensing device obtains the MAC address of the terminal device based on the MAC address and the operating frequency band of the routing device.

In this manner, the sensing device may not be connected to the routing device, and obtaining the MAC address of the terminal device by using the routing device means obtaining the MAC address of the terminal device by listening to the operating frequency band of the routing device. For details, refer to the foregoing embodiment described for FIG. 6. Details are not described herein again.

S102: Send a packet to the terminal device based on the MAC address.

In correspondence to Manner 1 in S101, the sensing device sends the packet to the terminal device in an air interface injection manner or a tunneled direct link setup TDLS manner based on the MAC address.

In correspondence to Manner 2 in S101, the sensing device sends the packet to the terminal device in an air interface injection manner based on the MAC address.

The packet in this embodiment of this application may be any type of packet, for example, a probe packet.

S103: Receive a response from the terminal device for the packet.

S104: Obtain CSI between the sensing device and the terminal device based on the response, to perform sensing.

In this embodiment of this application, the terminal device does not need to be disconnected from the routing device and then connect to the sensing device. The sensing device may communicate with the terminal device based on the MAC address of the terminal device, to perform sensing based on the CSI between the sensing device and the terminal device.

It should be understood that sequence numbers of the foregoing processes do not mean execution sequences. The execution sequence of the processes should be determined based on functions and internal logic of the processes, and should not be construed as any limitation on implementation processes of embodiments of this application.

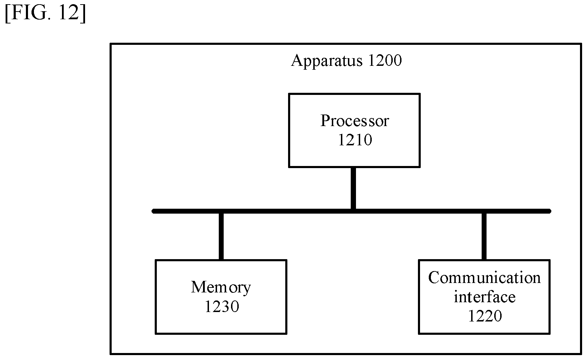

The foregoing describes, with reference to FIG. 1 to FIG. 10, in detail the methods for establishing a sensing network according to embodiments of this application. The following describes, with reference to FIG. 11 and FIG. 12, in detail apparatuses for establishing a sensing network according to embodiments of this application.

FIG. 11 is a block diagram of an apparatus 1100 for establishing a sensing network according to an embodiment of this application. The apparatus 1100 for establishing a sensing network includes an obtaining module 1110 and a sending module 1120.

The obtaining module 1110 is configured to obtain a media access control MAC address of a terminal device by using a routing device, where the terminal device is connected to the routing device. The sending module 1120 is configured to send a packet to the terminal device based on the MAC address. The obtaining module 1110 is further configured to: receive, from the terminal device, a response to the packet; and obtain CSI between the apparatus and the terminal device based on the response, to perform sensing.

Optionally, the apparatus 1100 further includes a processing module, configured to connect to the routing device. The sending module 1120 is configured to broadcast an ARP request packet by using the routing device. The obtaining module 1110 is configured to receive an ARP response packet of the terminal device from the routing device, where the ARP response packet includes the MAC address of the terminal device.

Optionally, the sending module 1120 is configured to send the packet to the terminal device in an air interface injection manner or a TDLS manner based on the MAC address.

Optionally, the obtaining module 1110 is configured to: receive a MAC address and an operating frequency band of the routing device; and obtain the MAC address of the terminal device based on the MAC address and the operating frequency band.

Optionally, the processing module is configured to listen to a packet on the operating frequency band. The obtaining module 1110 is configured to obtain the MAC address of the terminal device based on a packet detected through listening and the MAC address of the routing device.

Optionally, the packet detected through listening includes a first packet, and a destination MAC address of the first packet is the MAC address of the routing device. The processing module is configured to determine a source MAC address of the first packet as the MAC address of the terminal device.

Optionally, the packet detected through listening includes a second packet, and a source MAC address of the second packet is the MAC address of the routing device. The processing module is configured to determine a destination MAC address of the second packet as the MAC address of the terminal device.

Optionally, the sending module 1120 is configured to send the packet to the terminal device in an air interface injection manner based on the MAC address.

Optionally, the sending module 1120 is configured to send a first probe packet to the terminal device at a preset first frequency based on the MAC address. The obtaining module 1110 is configured to obtain first CSI between the apparatus and the terminal device based on a response, from the terminal device, to the first probe packet, to determine whether there is a person moving in first space in which the terminal device is located.

Optionally, the sending module 1120 is configured to: if it is determined, based on the first CSI, that there is a person moving in the first space in which the terminal device is located, send a second probe packet to the terminal device at a second frequency, where the second frequency is higher than the first frequency.

Optionally, the terminal device is a primary device in a plurality of terminal devices in same space, and the plurality of terminal devices further include at least one candidate device connected to the routing device. The sending module 1120 is configured to send a third probe packet to the at least one candidate device at the first frequency.

Optionally, the processing module is configured to: if no response, from the terminal device, to the second probe packet is received, determine a target device in the at least one candidate device, where the target device is one of candidate devices that respond to the third probe packet; and adjust a frequency of sending a probe packet to the target device to the second frequency.

Optionally, the processing module is configured to write the MAC address of the terminal device into a MAC address list.

Optionally, the processing module is configured to update the MAC address list when a new MAC address is obtained.

In an optional example, a person skilled in the art may understand that the apparatus 1100 may be specifically the sensing device in the foregoing embodiments, or functions of the sensing device in the foregoing embodiments may be integrated into the apparatus 1100. The functions may be implemented by hardware, or may be implemented by hardware executing corresponding software. The hardware or the software includes one or more modules corresponding to the function. The apparatus 1100 may be configured to perform procedures and/or steps corresponding to the sensing device in the foregoing method embodiments.

It should be understood that the apparatus 1100 herein is represented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In this embodiment of this application, the apparatus 1100 in FIG. 11 may alternatively be a chip or a chip system, for example, a system on chip (system on chip, SoC).

FIG. 12 is a block diagram of an apparatus 1200 for establishing a sensing network according to an embodiment of this application. The apparatus 1200 includes a processor 1210, a communication interface 1220, and a memory 1230. The processor 1210, the communication interface 1220, and the memory 1230 communicate with each other through an internal connection path. The memory 1230 is configured to store instructions. The processor 1210 is configured to execute the instructions stored in the memory 1230, to control the communication interface 1220 to send a signal and/or receive a signal.

It should be understood that the apparatus 1200 may be configured to perform steps and/or procedures corresponding to the sensing device in the foregoing method embodiments. Optionally, the memory 1230 may include a read-only memory and a random access memory, and provide instructions and data for the processor. A part of the memory may further include a non-volatile random access memory. For example, the memory may further store information of a device type. The processor 1210 may be configured to execute the instruction stored in the memory, and when the processor executes the instruction, the processor can perform steps and/or procedures corresponding to the sensing device in the foregoing method embodiments.

It should be understood that, in this embodiment of this application, the processor 1210 may be a central processing unit (central processing unit, CPU), or the processor may be another general-purpose processor, a digital signal processor (digital signal processing, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

This application further provides a computer-readable storage medium. The computer-readable storage medium stores computer-executable instructions. When the computer-executable instructions are executed by a processor, the method performed by the sensing device in any one of the foregoing method embodiments may be implemented.

An embodiment of this application further provides a computer program product, including a computer program. When the computer program is executed by a processor, the method performed by the sensing device in any one of the foregoing method embodiments may be implemented.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the modules is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected according to actual needs to achieve the objectives of the solutions of embodiments.

In addition, functional modules in embodiments of this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A method for establishing a sensing network, applied to a sensing device, and comprising:
obtaining a media access control MAC address of a terminal device by using a routing device, wherein the terminal device is connected to the routing device;
sending a packet to the terminal device based on the MAC address;
receiving, from the terminal device, a response to the packet; and
obtaining channel state information CSI between the sensing device and the terminal device based on the response, to perform sensing.

2. The method according to claim 1, wherein the obtaining a MAC address of a terminal device by using a routing device comprises:
connecting to the routing device;
broadcasting an address resolution protocol ARP request packet by using the routing device; and
receiving an ARP response packet of the terminal device from the routing device, wherein the ARP response packet comprises the MAC address of the terminal device.

3. The method according to claim 2, wherein the sending a packet to the terminal device based on the MAC address comprises:
sending the packet to the terminal device in an air interface injection manner or a tunneled direct link setup TDLS manner based on the MAC address.

4. The method according to claim 1, wherein the obtaining a MAC address of a terminal device by using a routing device comprises:
receiving a MAC address and an operating frequency band of the routing device; and
obtaining the MAC address of the terminal device based on the MAC address and the operating frequency band.

5. The method according to claim 4, wherein the obtaining the MAC address of the terminal device based on the MAC address and the operating frequency band comprises:
listening to a packet on the operating frequency band; and
obtaining the MAC address of the terminal device based on a packet detected through listening and the MAC address of the routing device.

6. The method according to claim 5, wherein the packet detected through listening
comprises a first packet, and a destination MAC address of the first packet is the MAC address of the routing device; and
the obtaining the MAC address of the terminal device based on a packet detected through listening and the MAC address of the routing device comprises:
determining a source MAC address of the first packet as the MAC address of the terminal device.

7. The method according to claim 5, wherein the packet detected through listening
comprises a second packet, and a source MAC address of the second packet is the MAC address of the routing device; and
the obtaining the MAC address of the terminal device based on a packet detected through listening and the MAC address of the routing device comprises:
determining a destination MAC address of the second packet as the MAC address of the terminal device.

8. The method according to any one of claims 4 to 7, wherein the sending a packet to the terminal device based on the MAC address comprises:
sending the packet to the terminal device in an air interface injection manner based on the MAC address.

9. The method according to any one of claims 1 to 8, wherein the sending a packet to the terminal device based on the MAC address comprises:
sending a first probe packet to the terminal device at a preset first frequency based on the MAC address; and
the obtaining CSI between the sensing device and the terminal device based on the response, to perform sensing comprises:
obtaining first CSI between the sensing device and the terminal device based on a response, from the terminal device, to the first probe packet, to determine whether there is a person moving in first space in which the terminal device is located.

10. The method according to claim 9, wherein the method further comprises:
if it is determined, based on the first CSI, that there is a person moving in the first space in which the terminal device is located, sending a second probe packet to the terminal device at a second frequency, wherein the second frequency is higher than the first frequency.

11. The method according to claim 10, wherein the terminal device is a primary
device in a plurality of terminal devices in same space, and the plurality of terminal devices further comprise at least one candidate device connected to the routing device; and
the method further comprises:
sending a third probe packet to the at least one candidate device at the first frequency.

12. The method according to claim 11, wherein after the sending a second probe packet to the terminal device at a second frequency, the method further comprises:
if no response, from the terminal device, to the second probe packet is received, determining a target device in the at least one candidate device, wherein the target device is one of candidate devices that respond to the third probe packet; and
adjusting a frequency of sending a probe packet to the target device to the second frequency.

13. The method according to any one of claims 1 to 8, wherein after the obtaining a MAC address of a terminal device by using a routing device, the method further comprises:
writing the MAC address of the terminal device into a MAC address list.

14. The method according to claim 13, wherein the method further comprises: updating the MAC address list when a new MAC address is obtained.

15. An apparatus for establishing a sensing network, comprising a module configured to perform the method according to any one of claims 1 to 14.

16. An apparatus for establishing a sensing network, comprising a processor and a memory, wherein
the memory is configured to store a computer program; and
the processor is configured to invoke and execute the computer program, for the apparatus to perform the method according to any one of claims 1 to 14.

17. A computer-readable storage medium, configured to store a computer program, wherein when the computer program is run on a computer, the computer is enabled to perform the method according to any one of claims 1 to 14.

18. A computer program product, wherein the computer program product comprises computer program code, and when the computer program code is run on a computer, the computer is enabled to perform the method according to any one of claims 1 to 14.

19. A program product, wherein the program product comprises a computer program, the computer program is stored in a readable storage medium, at least one processor of a communication apparatus is capable of reading the computer program from the readable storage medium, and the at least one processor executes the computer program, for the communication apparatus to implement the method according to any one of claims 1 to 14.
